# EUROPEAN PATENT SPECIFICATION

(11) **EP 2 439 313 B1**
(45) Date of publication and mention of the grant of the patent: **21.09.2016**
(21) Application number: 10783141.4
(22) Date of filing: 01.06.2010
(51) Int. Cl.: C25B 9/00, C25B 1/04, C01B 3/04, H01M 8/06, C25B 1/00

(54) **PHOTOELECTROCHEMICAL CELL**
PHOTOELEKTROCHEMISCHE ZELLE
CELLULE PHOTO-ÉLECTROCHIMIQUE

(30) Priority: 02.06.2009 JP 2009132809; 03.06.2009 JP 2009133749
(43) Date of publication of application: 11.04.2012
(73) Proprietor: Panasonic Intellectual Property Management Co., Ltd., Osaka 540-6207 (JP)
(72) Inventor: NOMURA, Takaiki, 2-1-61, Shiromi, Chuo-ku, Osaka-shi, Osaka 540-6207 (JP); SUZUKI, Takahiro, 2-1-61, Shiromi, Chuo-ku, Osaka-shi, Osaka 540-6207 (JP); TOKUHIRO, Kenichi, 2-1-61, Shiromi, Chuo-ku, Osaka-shi, Osaka 540-6207 (JP); KUROHA, Tomohiro, 2-1-61, Shiromi, Chuo-ku, Osaka-shi, Osaka 540-6207 (JP); TANIGUCHI, Noboru, 2-1-61, Shiromi, Chuo-ku, Osaka-shi, Osaka 540-6207 (JP); HATOH, Kazuhito, 2-1-61, Shiromi, Chuo-ku, Osaka-shi, Osaka 540-6207 (JP); TOKUMITSU, Shuzo, 2-1-61, Shiromi, Chuo-ku, Osaka-shi, Osaka 540-6207 (JP)
(74) Representative: Eisenführ Speiser
(86) International application number: PCT/JP2010/003670
(87) International publication number: WO 2010/140353

(56) References cited:
- GB-A- 2 414 243
- JP-A- 2003 275 602
- JP-A- 2006 089 336
- JP-A- 2006 297 300
- JP-T- 2008 507 464
- US-A1- 2005 183 962
- FUJISHIMA A ET AL: "ELECTROCHEMICAL PHOTOLYSIS OF WATER AT A SEMICONDUCTOR ELECTRODE", NATURE, NATURE PUBLISHING GROUP, UNITED KINGDOM, vol. 238, 7 July 1972 (1972-07-07), page 37/38, XP008046230, ISSN: 0028-0836, DOI: 10.1038/238037A0
- YONGJING LIN ET AL: "TiO 2 /TiSi 2 Heterostructures for High-Efficiency Photoelectrochemical H 2 O Splitting", JOURNAL OF THE AMERICAN CHEMICAL SOCIETY, vol. 131, no. 8, 4 March 2009 (2009-03-04) , pages 2772-2773, XP055023953, ISSN: 0002-7863, DOI: 10.1021/ja808426h & Yongjing Lin ET AL: "Supporting Information: TiO 2 /TiSi 2 Hetero-nanostructures for High-efficiency Photoelectrochemical Cells", , 4 March 2009 (2009-03-04), XP055138265, Retrieved from the Internet: URL:http://pubs.acs.org/doi/suppl/10.1021/ ja808426h/suppl_file/ja808426h_si_001.pdf [retrieved on 2014-09-04]
- LI X Z ET AL: "Photoelectrocatalytic degradation of humic acid in aqueous solution using a Ti/TiO2 mesh photoelectrode", WATER RESEARCH, ELSEVIER, AMSTERDAM, NL, vol. 36, no. 9, 1 May 2002 (2002-05-01), pages 2215-2224, XP004354783, ISSN: 0043-1354, DOI: 10.1016/S0043-1354(01)00440-7

## Description

### TECHNICAL FIELD

The present invention relates to a photoelectrochemical cell for decomposing water by light irradiation.

### BACKGROUND ART

There are conventionally known techniques for decomposing water into hydrogen and oxygen by irradiating an optical semiconductor with light.

For example, JP 51(1976)-123779 A discloses a technique for generating hydrogen or oxygen on the surfaces of an optical semiconductor electrode and a counter electrode facing each other in an electrolyte solution by irradiating the surface of the optical semiconductor electrode with light.

JP 04(1992)-231301 A discloses a water photolysis apparatus including a reaction tube in which an optical semiconductor layer is formed on the outer surface of a cylindrical conductor and a counter electrode is formed on the inner surface thereof. This apparatus is configured to separate the generated hydrogen and oxygen from each other by using the inner region and the outer region of the reaction tube.

JP 2006-176835 A discloses, as another apparatus capable of separating hydrogen and oxygen generated by photolysis of water, an apparatus including an anode electrode including an optical semiconductor, a proton conducting membrane, and a cathode electrode. Through-holes are formed in the cathode electrode, and a platinum layer serving as a catalyst layer is formed on the inner surface of each through-hole. This apparatus is configured to discharge hydrogen generated on the inner surfaces of the through-holes in the cathode electrode, through those through-holes, so as to separate the generated hydrogen from oxygen.

Fujishima A et al., "Electrochemical Photolysis of Water at a Semiconductor Electrode", as published in Nature, Nature Publishing Group, United Kingdom, vol. 238, 7 July 1972, pages 37/38, discloses an electrochemical cell with a TiO2 n-type semiconductor electrode and a platinum electrode for photolysis of water. Further, GB 2 414 243 discloses a photoelectrochemical system for the cleavage of an electrolyte into hydrogen by light.

### SUMMARY OF INVENTION

### Technical Problem

However, a configuration as disclosed in JP 51(1976)-123779 A, in which an optical semiconductor electrode and a counter electrode facing each other are merely disposed in an electrolyte solution, makes it difficult to separate generated hydrogen and oxygen from each other. The structure employed in Patent Literature 1 has another problem in that no consideration is given to the state in which the structure is set in place, and therefore, when the structure is set in certain positions, the generated gases cover the surfaces of the electrodes, resulting in a decrease in the hydrogen production efficiency.

In the case of employing a structure as disclosed in JP 04(1992)-231301 A, in which an optical semiconductor (optical semiconductor electrode) is formed on the outer surface of a cylindrical conductor and a counter electrode is formed on the inner surface thereof so that hydrogen and oxygen generated inside and outside the cylindrical conductor are separated from each other, these electrodes must be disposed to face the sun if sunlight is used. In this case, if the surface of the optical semiconductor electrode is positioned to face the sun, oxygen or hydrogen generated on the surface of the counter electrode inside the cylindrical conductor covers the surface of the counter electrode and is unlikely to be released therefrom, while hydrogen or oxygen generated on the surface of the optical semiconductor electrode would be released from the surface of the optical semiconductor electrode. Therefore, such a configuration has a problem in that the contact area between the counter electrode and water decreases, resulting in a decrease in the hydrogen production efficiency.

In the configuration disclosed in JP 2006-176835 A, if the optical semiconductor of the anode electrode is positioned to face the sun, hydrogen generated inside the through-holes of the cathode electrode is unlikely to be discharged from the through-holes, which is a problem in that the inner surfaces of the through-holes are covered with hydrogen and thus the efficiency of water photolysis decreases, resulting in a decrease in the hydrogen production efficiency.

Accordingly, it is an object of the present invention to provide a photoelectrochemical cell that prevents generated gases from covering the surfaces of electrodes so as to improve the hydrogen production efficiency.

### Solution to Problem

The photoelectrochemical cell of the present invention is a photoelectrochemical cell according to claim 1 for hydrogen generation by decomposition of water by light irradiation.

### Advantageous Effects of Invention

Generally, in order to enhance the light use efficiency, a photoelectrochemical cell is placed in such a position that an optical semiconductor layer of a first electrode faces a light source such as the sun. When the photoelectrochemical cell of the present invention is placed in this position, the first electrode is positioned with the optical semiconductor layer facing upward, and the second electrode is positioned with the surface in contact with the electrolyte solution facing upward. When the photoelectrochemical cell is placed in this position, gases generated on the surface of the optical semiconductor layer of the first electrode and the surface of the second electrode can easily move away from the surfaces of the first electrode and the second electrode by buoyancy. Therefore, the gases do not adhere to the surface of the optical semiconductor layer and the surface of the second electrode and do not cover these surfaces. The photoelectrochemical cell is further provided with a water inlet. When water is supplied through the inlet, the flow of the electrolyte solution takes place, which allows the generated gasses to move away from the electrode surfaces more efficiently. With the configuration of the present invention, as described above, the generated gases do not block the contact between the electrolyte solution and the surfaces of the optical semiconductor layer and the second electrode. Therefore, the initial efficiency of water decomposition can be maintained for a long period of time, and thus a decrease in the hydrogen production efficiency can be suppressed.

### BRIEF DESCRIPTION OF DRAWINGS

Fig. 1 is a schematic diagram showing the configuration of a photoelectrochemical cell in a first embodiment of the present invention.
Fig. 2 is a schematic diagram showing the configuration of a photoelectrochemical cell in a second embodiment of the present invention.
Fig. 3 is a schematic diagram showing the configuration of a photoelectrochemical cell in Comparative Example 1.
Fig. 4 is a schematic diagram showing the configuration of a photoelectrochemical cell in Comparative Example 2.
Fig. 5 is a schematic diagram showing the configuration of a photoelectrochemical cell in Comparative Example 3.
Fig. 6 is a schematic diagram showing the configuration of a photoelectrochemical cell in Example 2.
Fig. 7 is a schematic diagram showing the configuration of a photoelectrochemical cell in Example 3.
Fig. 8 is a schematic diagram showing the configuration of a photoelectrochemical cell in Example 4.
Fig. 9 is a schematic diagram showing the configuration of a photoelectrochemical cell in Example 5.
Fig. 10 is a schematic diagram showing the configuration of a photoelectrochemical cell in Comparative Example 5.
Fig. 11 is a schematic diagram showing the configuration of a photoelectrochemical cell in Comparative Example 6.
Fig. 12 is a schematic diagram showing the configuration of a photoelectrochemical cell in Comparative Example 7.
Fig. 13 is a schematic diagram showing the configuration of a photoelectrochemical cell in Comparative Example 8.
Fig. 14 is a diagram showing a method for placing an optical semiconductor electrode in a container in Example 5.

### DESCRIPTION OF EMBODIMENTS

Hereinafter, the embodiments of the present invention will be described in detail with reference to the drawings. The following embodiments are merely examples, and the present invention is not limited to these embodiments.

### (First Embodiment)

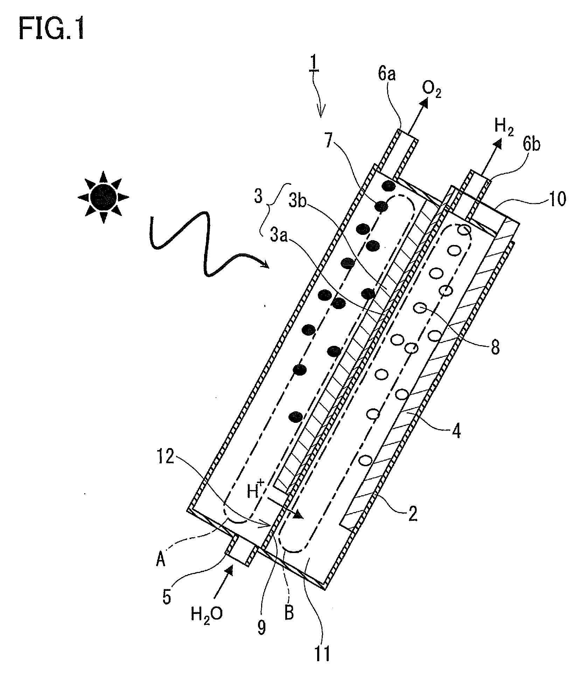

Fig. 1 is a schematic diagram showing the configuration of a photoelectrochemical cell in a first embodiment of the present invention.

As shown in Fig. 1, a photoelectrochemical cell 1 in the present embodiment includes: an optical semiconductor electrode (first electrode) 3 composed of a conductive substrate 3a and an n-type semiconductor layer (optical semiconductor layer) 3b disposed on the conductive substrate 3a; a counter electrode (second electrode) 4 disposed to face the surface of the optical semiconductor electrode 3 on the conductive substrate 3a side and connected electrically to the conductive substrate 3a by a lead wire 10; an electrolyte solution 11 containing water and disposed in contact with the surface of the n-type semiconductor layer 3b and the surface of the counter electrode 4; a container 2 in which the optical semiconductor electrode 3, the counter electrode 4, and the electrolyte solution 11 are disposed; an inlet 5 for supplying water into the container 2; and an ion passing portion 12. The inlet 5 is disposed at the lower end of the container 2 when the photoelectrochemical cell 1 is set in place. The ion passing portion 12 is a portion that allows ions (for example, hydrogen ions and hydroxide ions) to move between the electrolyte solution 11 in a region A (first region) on the surface side of the n-type semiconductor layer 3b and the electrolyte solution 11 in a region B (second region) on the opposite side of the region A with respect to the optical semiconductor electrode 3. In the present embodiment, the ion passing portion 12 is an opening formed in the optical semiconductor electrode 3, and provided below the level of the lower end of the optical semiconductor electrode 3, when the lower surface of the container 2 of the photoelectrochemical cell 1 that is set in place is defined as a reference level.

When the n-type semiconductor layer 3b is irradiated with light, the photoelectrochemical cell 1 decomposes water supplied into the container 2 so as to generate oxygen 7 and hydrogen 8. The oxygen 7 is generated on the surface of the n-type semiconductor layer 3b of the optical semiconductor electrode 3, and the hydrogen 8 is generated on the surface of the counter electrode 4. In the present embodiment, an n-type semiconductor is used for the optical semiconductor layer of the optical semiconductor electrode 3, but a p-type semiconductor also can be used. When a p-type semiconductor is used, hydrogen and oxygen are generated on the opposite electrodes. That is, hydrogen is generated on the optical semiconductor electrode 3, and oxygen is generated on the counter electrode 4.

In order to further ensure the separation between a gas (oxygen 7 herein) generated on the optical semiconductor electrode 3 side and a gas (hydrogen 8 herein) generated on the counter electrode 4 side, the photoelectrochemical cell 1 is further provided with a gas separation member 9 in a region (including the region of the ion passing member 12) between the optical semiconductor electrode 3 and the counter electrode 4.

The container 2 is provided with an oxygen outlet (first outlet) 6a for discharging the oxygen 7 generated in the container 2 and a hydrogen outlet (second outlet) 6b for discharging the hydrogen 8 generated therein. The hydrogen and the oxygen discharged through these outlets are collected separately.

Fig. 1 shows a state in which the photoelectrochemical cell 1 is set in place so that the optical semiconductor electrode 3 is positioned with the n-type semiconductor layer 3b facing upward and the counter electrode 4 is positioned with the surface in contact with the electrolyte solution 11 facing upward.

In this placement state, the oxygen 7 generated on the surface of the n-type semiconductor layer 3b can move away from the surface of the n-type semiconductor layer 3b by buoyancy to the upper part of the cell, without adhering to the surface of the n-type semiconductor layer 3b and the surface of the counter electrode 4. The hydrogen 8 also does not adhere to the surface of the n-type semiconductor layer 3b because the conductive substrate 3a and the gas separation member 9 are disposed between the n-type semiconductor layer 3b and the counter electrode 4 on which the hydrogen 8 is generated, although the counter electrode 4 is located below the n-type semiconductor layer 3b. Therefore, the surface of the n-type semiconductor layer 3b is not covered with the generated oxygen 7 and hydrogen 8. As a result, the initial efficiency of water decomposition can be maintained for a long period of time. Furthermore, since the optical semiconductor electrode 3 is disposed above the counter electrode 4 (so that the former faces a light source), the surface of the optical semiconductor electrode 3 is irradiated with light without being blocked by the counter electrode 4. Therefore, the quantum efficiency of the cell 1 is improved further. As stated herein, the phrase "the n-type semiconductor layer 3b, namely, the optical semiconductor layer faces upward" means that the normal vector on the surface of the optical semiconductor layer points upward to a region including the vertically upward direction with respect to the horizontal plane.

On the other hand, the counter electrode 4 is disposed to face the surface of the optical semiconductor electrode 3 on the conductive substrate 3a side. The counter electrode 4 is disposed in such a position that the surface that faces the optical semiconductor electrode 3 is in contact with the electrolyte solution 11 and this surface faces upward. The phrase "the surface of the counter electrode 4 in contact with the electrolyte solution 11 faces upward" means that the normal vector on this surface points upward to a region including the vertically upward direction with respect to the horizontal plane. In the present embodiment, since the surface of the counter electrode 4 on which the hydrogen 8 is generated faces upward, as described above, the generated hydrogen 8 can move away from the surface of the counter electrode 4 by buoyancy to the upper part of the cell, without adhering to the surface of the counter electrode 4. Therefore, the surface of the counter electrode 4 is not covered with the hydrogen 8. Furthermore, since the n-type semiconductor layer 3b on which the oxygen 7 is generated is located above the counter electrode 4, the surface of the counter electrode 4 is also not covered with the oxygen 7. Therefore, the initial efficiency of water decomposition can be maintained for a long period of time.

The optical semiconductor electrode 3 and the counter electrode 4 are described in more detail.

Preferably, the n-type semiconductor layer 3b that constitutes the optical semiconductor electrode 3 is formed of a semiconductor having a conduction band edge level of not more than 0 V, which is the standard reduction potential of hydrogen ions, and a valence band edge level of not less than 1.23 V, which is the standard oxidation potential of water, in order to photolyze water and generate hydrogen. Semiconductors that can be used effectively for that purpose include: oxides, oxynitrides, and nitrides of titanium, tungsten, iron, copper, tantalum, gallium, or indium alone; complex oxides of these elements; these oxides, oxynitrides, and nitrides, and complex oxides additionally containing alkali metal ions or alkaline earth metal ions; and metals supporting, on their surfaces, iron, copper, silver, gold, platinum, or the like. Among these, metals supporting, on their surfaces, iron, copper, silver, gold, platinum, or the like are used particularly preferably because they have low overvoltages. Furthermore, a multilayer film of a film made of a material having a conduction band edge level of not more than 0 V, which is the standard reduction potential of hydrogen ions, and a film made of a material having a valence band edge level of not less than 1.23 V, which is the standard oxidation potential of water, also is used effectively. As an example, a WO₃/ITO (Indium Tin Oxide)/Si multilayer film or the like, for example, is used effectively.

As the conductive substrate 3a, any substrate may be used as long as it forms an ohmic contact with the n-type semiconductor layer 3b, and the material thereof is not particularly limited. Generally, a metal substrate is used, but a conductive film substrate in which a conductive film such as ITO or FTO (Fluorine-doped Tin Oxide) is formed on an insulating substrate such as glass also can be used. However, it is better that a region of the conductive substrate 3a that is not covered with the n-type semiconductor layer 3b be not in contact with water to prevent a cell reaction from occurring in the electrode. Therefore, it is desirable that the region of the conductive substrate 3a that is not covered with the n-type semiconductor layer 3b be covered with an insulating material such as resin.

A material with a low overvoltage is used advantageously for the counter electrode 4. In the present embodiment, hydrogen 8 is generated on the counter electrode 4. Therefore, an electrode made of a metal such as Pt, Au, Ag, or Fe, or an electrode on which such a metal is supported is used suitably as the counter electrode 4. In the case where a p-type semiconductor layer is used as an alternative to the n-type semiconductor layer 3b to form a photoelectrochemical cell for generating oxygen on the counter electrode 4, an electrode made of a metal such as Ni or Pt, or an electrode on which such a metal is supported is used suitably as the counter electrode 4.

In the present embodiment, when the photoelectrochemical cell 1 is set in place, the inlet 5 for supplying water is disposed at the lower end of the container 2. With this configuration, the electrolyte solution 11 flows upward along the surface of the optical semiconductor electrode 3 and the surface of the counter electrode 4, which allows the generated oxygen and hydrogen to move away from the surfaces of these electrode more efficiently. In the present embodiment, the water inlet 5 is disposed at the lower end of the container 2, but the position of the inlet 5 is not limited to this position as long as it is the position where water can be supplied into the container 2 through the inlet 5. It should be noted that in order to allow oxygen and hydrogen to move away from the electrode surfaces efficiently by the flow of the electrolyte solution 11, the inlet 5 is preferably disposed below the level of the lower end of the optical semiconductor electrode 3 and the level of the lower end of the counter electrode 4, when the lower surface of the container 2 of the photoelectrochemical cell 1 that is set in place is defined as a reference level.

The ion passing portion 12 is an opening formed in the optical semiconductor electrode 3. With this ion passing portion 12, ions in the electrolyte solution 11 can be supplied to the electrode surfaces efficiently without being blocked from moving in the electrolyte solution by the electrodes. In the present embodiment, the ion passing portion 12 is disposed below the level of (at a lower position than) the lower end of the optical semiconductor electrode 3 and below the level of (at a lower position than) the lower end of the counter electrode 4, when the lower surface of the container 2 of the photoelectrochemical cell 1 that is set in place is defined as a reference level. The oxygen 7 and the hydrogen 8 generated by the decomposition of water move upward to the upper part of the cell 1 by buoyancy. Accordingly, the configuration of the present embodiment inhibits the generated oxygen 7 and hydrogen 8 from entering the ion passing portion 12, which allows hydrogen ions or hydroxide ions necessary for decomposition of water to move between the two electrodes (between the region A and the region B) while separating the oxygen 7 and the hydrogen 8 from each other, and thus achieves long-term water decomposition.

The gas separation member 9 is disposed in the region of the ion passing portion 12. Therefore, during the highly efficient photolysis of water, the oxygen 7 and hydrogen 8 generated thereby can be completely separated from each other. In the present embodiment, the gas separation member 9 is composed of an ion exchanger. The use of the ion exchanger allows only the ions to pass through it while separating the oxygen 7 and the hydrogen 8 from each other. Therefore, continuous and highly efficient photolysis of water can be carried out. As the ion exchanger used for the gas separation member 9, a solid polymer electrolyte having a high ion transport number, for example, Nafion (registered trademark) manufactured by DuPont, is desirably used. As an alternative to an ion exchanger, a porous membrane such as a polytetrafluoroethylene porous membrane also can be used for the gas separation member 9. In this case, a porous membrane with such a pore size that allows the electrolyte solution 11 to pass therethrough and prevents the generated oxygen 7 and hydrogen 8 from passing therethrough may be used. In the present embodiment, as described above, the position of the ion passing portion 12 allows the oxygen 7 and the hydrogen 8 to be separated from each other at a high probability Therefore, the gas separation member 9 may be omitted.

A portion of the container 2 (light incident portion) that faces the n-type semiconductor layer 3b is made of a material that transmits light such as sunlight. The container 2 is provided with an oxygen outlet (first outlet) 6a for discharging the oxygen 7 generated in the container 2 and a hydrogen outlet (second outlet) 6b for discharging the hydrogen 8 generated therein. Preferably, the oxygen outlet 6a and the hydrogen outlet 6b are disposed so that the oxygen outlet 6a is located at the same level as or above the level of the upper end of the optical semiconductor electrode 3 and that the hydrogen outlet 6b is located at the same level as or above the level of the upper end of the counter electrode 4, when the photoelectrochemical cell 1 is set in place. With this configuration, the oxygen 7 and the hydrogen 8 that have moved away from the surface of the optical semiconductor electrode 3 and the surface of the counter electrode 4 can be collected efficiently. In Fig. 1, the member provided as the counter electrode 4 extends outside the container 2 and the upper end of the member is located above the level of the hydrogen outlet 6b. However, it can be said that, in this case, also, the hydrogen outlet 6b is located at the same level as or above the level of the upper end of the counter electrode 4, because a portion of the member in contact with the electrolyte solution 11 serves as the counter electrode 4.

In the configuration shown in Fig. 1, the optical semiconductor electrode 3 and the counter electrode 4 have almost the same area, but it is desirable that the area of the counter electrode 4 be smaller than that of the optical semiconductor electrode 3. This maximizes the light receiving area of the optical semiconductor electrode 3. Furthermore, the current density of the photoelectrochemical cell 1 is about one twentieth that obtained in water electrolysis. Therefore, if a platinum catalyst is used for the counter electrode 4 as in the case of water electrolysis, a significant cost reduction can be achieved.

Any electrolyte solution can be used for the electrolyte solution 11 as long as it contains water. The electrolyte solution 11 may be acidic or alkaline. The electrolyte solution 11 may consist of water.

Next, the operation of the photoelectrochemical cell 1 of the present embodiment is described.

When the n-type semiconductor layer 3b of the optical semiconductor electrode 3 disposed inside the container 2 of the photoelectrochemical cell 1 is irradiated with sunlight through the light incident portion of the container 2, water is decomposed to generate the oxygen 7 on the n-type semiconductor layer 3b according to the following reaction formula (1). Electrons (e⁻) generated by this reaction move from the n-type semiconductor layer 3b to the counter electrode 4 through the conductive substrate 3a and the lead wire 10. On the other hand, hydrogen ions (H⁺) generated by the reaction according to the reaction formula (1) move from the region A to the region B through the ion passing portion 12 and the gas separation member 9, and react with the electrons that have moved to the counter electrode 4, on the surface of the counter electrode 4 (according to the following reaction formula (2)). Thus, hydrogen is generated.

2H₂O → O₂↑ + 4H⁺ + 4e⁻ (1)

4e⁻ + 4H⁺ → 2H₂↑ (2)

In the present embodiment, the surface of the optical semiconductor electrode 3 on which the oxygen 7 is generated and the surface of the counter electrode 4 on which the hydrogen 8 is generated face upward. Therefore, the oxygen 7 generated on the optical semiconductor electrode 3 moves away therefrom by buoyancy, and the hydrogen 8 generated on the counter electrode 4 moves away therefrom by buoyancy. Since the ion passing portion 12 is provided below the levels of the portions where the oxygen 7 and the hydrogen 8 are generated and the gas separation member 9 is provided additionally, the oxygen 7 and the hydrogen 8 do not mix with each other, but the oxygen 7 moves to the upper part of the region on the optical semiconductor electrode 3 side partitioned by the gas separation member 9, and the hydrogen 8 moves to the upper part of the region on the counter electrode 4 side partitioned by the gas separation member 9. Accordingly, the oxygen 7 is discharged through the oxygen outlet 6a disposed in the region on the optical semiconductor electrode 3 side, and the hydrogen 8 is discharged through the hydrogen outlet 6b disposed in the region on the counter electrode 4 side. During this process, the surfaces of the optical semiconductor electrode 3 and the counter electrode 4 are not covered with the generated gasses, as described above, and therefore the initial efficiency of water decomposition can be maintained for a long period of time.

### (Second Embodiment)

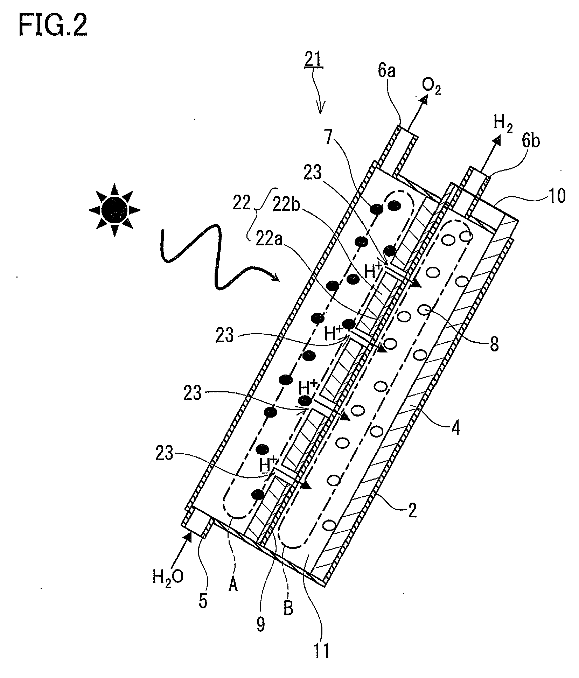

Fig. 2 is a schematic diagram showing the configuration of a photoelectrochemical cell in a second embodiment of the present invention.

A photoelectrochemical cell 21 of the present embodiment has the same configuration as the photoelectrochemical cell 1, except that the structures of an optical semiconductor electrode (first electrode) 22 and an ion passing portion 23 are different from those of the optical semiconductor electrode 3 and the ion passing portion 12 of the photoelectrochemical cell 1 of the first embodiment. Therefore, only the optical semiconductor electrode 22 and the ion passing portion 23 are described herein.

The optical semiconductor electrode 22 is composed of a conductive substrate 22a and an n-type semiconductor layer (optical semiconductor layer) 22b disposed on the conductive substrate 22a. The counter electrode 4 is disposed to face the surface of the optical semiconductor electrode 22 on the conductive substrate 22a side and connected electrically to the conductive substrate 22a by the lead wire 10. When the n-type semiconductor layer 22b is irradiated with light, the photoelectrochemical cell 22 decomposes water supplied into the container 2 so as to generate oxygen 7 and hydrogen 8. The oxygen 7 is generated on the surface of the n-type semiconductor layer 22b of the optical semiconductor electrode 22, and the hydrogen 8 is generated on the surface of the counter electrode 4. In the present embodiment, an n-type semiconductor is used for the optical semiconductor layer of the optical semiconductor electrode 22, but a p-type semiconductor also can be used. When a p-type semiconductor is used, hydrogen and oxygen are generated on the opposite electrodes. That is, hydrogen is generated on the optical semiconductor electrode 22, and oxygen is generated on the counter electrode 4.

In the present embodiment, the photoelectrochemical cell 21 is set in place so that the optical semiconductor electrode 22 is disposed with the n-type semiconductor layer 22b facing upward. Therefore, the oxygen 7 generated on the surface of the n-type semiconductor layer 22b can move away from the surface of the n-type semiconductor layer 22b by buoyancy to the upper part of the cell, without adhering to the surface of the n-type semiconductor layer 22b and the surface of the counter electrode 4. The hydrogen 8 also does not adhere to the surface of the n-type semiconductor layer 22b because the conductive substrate 22a and the gas separation member 9 are disposed between the n-type semiconductor layer 22b and the counter electrode 4 on which the hydrogen 8 is generated, although the counter electrode 4 is located below the n-type semiconductor layer 22b. Therefore, the surface of the n-type semiconductor layer 22b is not covered with the generated oxygen 7 and hydrogen 8. As a result, the initial efficiency of water decomposition can be maintained for a long period of time.

Furthermore, the optical semiconductor electrode 22 is provided with the ion passing portions 23. The ion passing portion 23 is a portion that allows ions (for example, hydrogen ions and hydroxide ions) to move between the electrolyte solution 11 in the region A (first region) on the surface side of the n-type semiconductor layer 22b and the electrolyte solution 11 in the region B (second region) on the opposite side of the region A with respect to the optical semiconductor electrode 22. In the present embodiment, the ion passing portions 23 are through-holes formed in the optical semiconductor electrode 22. The porosity of the optical semiconductor electrode 22 is desirably 46% or less from the viewpoint of providing sufficient area of contact between the electrolyte solution 11 and the n-type semiconductor layer 22b of the optical semiconductor electrode 22 (i.e., providing about the same area of contact as the area of contact between the electrolyte solution and an optical semiconductor electrode, if it is a plate-like electrode without through-holes). Furthermore, the porosity is more desirably 13% or less from the viewpoint of providing sufficient area of the n-type semiconductor layer 22b to be irradiated with sunlight (i.e., providing about the same area to be irradiated with sunlight as the area of an optical semiconductor electrode to be irradiated with sunlight, if it is a plate-like electrode without through-holes). The shape of the through-holes is not particularly limited. For example, they may be slit-shaped. If the through-holes are slit-shaped, the distance between the slits corresponds to the diameter of the through-holes. In the photoelectrochemical cell 21 shown in Fig. 2, the ion passing portions 23 are the through-holes that are formed partially in the optical semiconductor electrode 22, but their arrangement is not limited to this. For example, the optical semiconductor electrode 22 may have a mesh structure or a honeycomb structure to obtain an optical semiconductor electrode having ion passing portions. Such a mesh structure or honeycomb structure of the optical semiconductor electrode 22 makes it possible not only to form the ion passing portions 23 in the optical semiconductor electrode 22 but also to increase the surface area of the n-type semiconductor layer 22b. Thereby, the efficiency of water photolysis can further be improved. The optical semiconductor electrode 22 having a mesh structure can be fabricated by using the conductive substrate 22a made of metal mesh or punching metal, for example, and forming the n-type semiconductor layer 22b on the metal mesh or punching metal. Likewise, the optical semiconductor electrode 22 having a honeycomb structure can be fabricated by using the conductive substrate 22a made of metal honeycomb and forming the n-type semiconductor layer 22b on the surface of the metal honeycomb. The ion passing portions can also be formed in the optical semiconductor electrode 22 if the electrode is partially made of an ion permeable material such as an ion exchanger. For example, the ion passing portions may be formed by forming through-holes in the optical semiconductor electrode 22 and filling the through-holes with an ion exchanger. Examples of such ion exchangers include solid electrolytes and solid polymer electrolytes. Since the photoelectrochemical cell 21 operates at about room temperature, a solid polymer electrolyte having a high ion transport number, for example, Nafion (registered trademark) manufactured by DuPont, is desirably used.

Next, the operation of the photoelectrochemical cell 21 of the present embodiment is described.

When the n-type semiconductor layer 22b of the optical semiconductor electrode 22 disposed inside the container 2 of the photoelectrochemical cell 21 is irradiated with sunlight through the light incident portion of the container 2, water is decomposed to generate the oxygen 7 on the n-type semiconductor layer 22b according to the above reaction formula (1). Electrons (e⁻) generated by this reaction move from the n-type semiconductor layer 22b to the counter electrode 4 through the conductive substrate 22a and the lead wire 10. On the other hand, hydrogen ions (H⁺) generated by the reaction according to the reaction formula (1) move from the region A to the region B through the ion passing portions 23 and the gas separation member 9, and react with the electrons that have moved to the counter electrode 4, on the surface of the counter electrode 4 (according to the above reaction formula (2)). Thus hydrogen is generated.

Since the surface of the optical semiconductor electrode 22 on which the oxygen 7 is generated and the surface of the counter electrode 4 on which the hydrogen 8 is generated face upward, the oxygen 7 generated on the optical semiconductor electrode 22 moves away therefrom by buoyancy, and the hydrogen 8 generated on the counter electrode 4 moves away therefrom by buoyancy. Since the gas separation member 9 is provided, the oxygen 7 and the hydrogen 8 do not mix with each other, but the oxygen 7 moves to the upper part of the region on the optical semiconductor electrode 22 side partitioned by the gas separation member 9, and the hydrogen 8 moves to the upper part of the region on the counter electrode 4 side partitioned by the gas separation member 9. Accordingly, the oxygen 7 is discharged through the oxygen outlet 6a disposed in the region on the optical semiconductor electrode 22 side, and the hydrogen 8 is discharged through the hydrogen outlet 6b disposed in the region on the counter electrode 4 side. During this process, the surfaces of the optical semiconductor electrode 22 and the counter electrode 4 are not covered with the generated gasses, as described above, and therefore the initial efficiency of water decomposition can be maintained for a long period of time.

The configuration, like that of the photoelectrochemical cell 21 of the present embodiment, in which through-holes serving as the ion passing portions 23 are formed in the optical semiconductor electrode 22, and the effects obtained thereby are briefly described below, in comparison with the conventional photoelectrochemical cells.

For example, in a configuration as disclosed in Patent Literature 1, in which an optical semiconductor electrode and a counter electrode facing each other are disposed in an electrolyte solution, ions (hydrogen ions and hydroxide ions) in the electrolyte solution may not be supplied efficiently to the surfaces of these electrodes for reasons such as a blockage of movement of the ions by the electrodes. If the ions are not supplied efficiently to the surfaces of the electrodes, the efficiency of water photolysis using the optical semiconductor electrode also decreases. Therefore, hydrogen and oxygen sometimes cannot be generated efficiently in this configuration.

In the configuration disclosed in Patent Literature 2, the electrolyte solution moves between the inner region and the outer region of the reaction tube through an opening formed at the lower end of the reaction tube. Therefore, it is difficult to supply hydrogen ions and hydroxide ions efficiently to the surfaces of the optical semiconductor layer and the counter electrode in the middle and upper parts of the reaction tube. Thus, the configuration of Patent Literature 2 makes it difficult to supply ions efficiently throughout the surfaces of the optical semiconductor layer and the counter electrode.

In the configuration disclosed in Patent Literature 3, hydrogen ions need to be supplied more efficiently to the surface of the cathode electrode to further improve the efficiency of water photolysis, although hydrogen ions are supplied from the anode electrode to the cathode electrode through the proton conducting membrane.

In contrast, in the photoelectrochemical cell 21 of the present embodiment, the ion passing portions 23 formed in the optical semiconductor electrode 22 allow the ions in the electrolyte solution 11 to move between the region A on the surface side of the optical semiconductor layer 22b of the optical semiconductor electrode 22 and the region B on the opposite side of the region A with respect to the optical semiconductor electrode 22. Since the counter electrode 4 is disposed to face the conductive substrate 22a of the optical semiconductor electrode 22, the ions that have moved from the region A to the region B through the ion passing portions 23 can be supplied efficiently to the surface of the counter electrode 4. Thereby, the efficiency of water photolysis can further be improved.

### EXAMPLES

Hereafter, examples of the present invention are described specifically.

### (Example 1)

As Example 1, a photoelectrochemical cell having the same configuration as the photoelectrochemical cell 1 shown in Fig. 1 was fabricated. The photoelectrochemical cell of Example 1 is described below with reference to Fig. 1.

First, an ITO thin film (with a thickness of 150 nm and a sheet resistance of 10 Ω/sq.) was formed by sputtering on a 10 cm × 10 cm square glass substrate. A titanium oxide film (an anatase polycrystalline film with a thickness of 500 nm) serving as the n-type semiconductor layer 3b was formed by sputtering on this ITO thin film-deposited glass substrate (corresponding to the conductive substrate 3a). The back surface of the conductive substrate 3a (on which the n-type semiconductor layer 3b was not provided) was insulated with fluororesin (not shown in the diagram). On the other hand, a 10 cm × 10 cm square platinum plate was prepared as the counter electrode 4. The back surface of the counter electrode 4 (i.e., the surface not in contact with the electrolyte solution) was insulated with fluororesin (not shown in the diagram). The counter electrode 4 was placed in the container 2 with its back surface being in close contact with the inner wall of the container 2 and its surface facing the conductive substrate 3a. The counter electrode 4 was connected electrically to the conductive substrate 3a by the lead wire 10. As the ion passing portion 12, a 1 cm × 10 cm opening was formed below the optical semiconductor electrode 3. As the gas separation member 9, an ion exchange membrane (Nafion (registered trademark) manufactured by DuPont) that does not allow the oxygen 7 and the hydrogen 8 to pass therethrough and allows hydrogen ions to pass therethrough was provided in contact with the conductive substrate 3a, between the optical semiconductor electrode 3 and the counter electrode 4 (including the opening as the ion passing portion 12). In the container 2, the water inlet 5 was provided below the level of the optical semiconductor electrode 3 and the level of the counter electrode 4 (on the lower surface of the container 2). Furthermore, in the container 2, the oxygen outlet 6a was provided at the same level as or above the level of the upper end of the optical semiconductor electrode 3, and the hydrogen outlet 6b was provided at the same level as or above the level of the upper end of the counter electrode 4. The container 2 was inclined at an angle of 60° with respect to the horizontal plane so that both the n-type semiconductor layer 3b of the optical semiconductor electrode 3 and the surface of the counter electrode 4 in contact with the electrolyte solution 11 faced upward and that the n-type semiconductor layer 3b was irradiated with sunlight at a right angle. Water with a pH of 0 was used as the electrolyte solution 11.

### <Sunlight Irradiation Experiment>

The photoelectrochemical cell 1 was actually irradiated with sunlight, and as a result, it was confirmed that the oxygen 7 was generated on the surface of the optical semiconductor electrodes 3 and the hydrogen 8 was generated on the surface of the counter electrodes 4. Then, the oxygen generation rate and the hydrogen generation rate were measured. As a result, the oxygen generation rate was 1.6 × 10⁻⁷ L/s, and the hydrogen generation rate was 3.1 × 10⁻⁷ L/s, and the ratio between the oxygen generation and the hydrogen generation was approximately 1:2. Thus stoichiometrically, it was confirmed that water was decomposed. The photocurrent flowing between the optical semiconductor electrode 3 and the counter electrode 4 was measured. As a result, the photocurrent was 2.3 mA, and thus stoichiometrically, it was confirmed that water was electrolyzed. The solar-to-hydrogen (STH) conversion efficiency was calculated using this value. As a result, the STH efficiency was about 0.028%. These measurements were continued, but there was no significant change in these values. One possible reason for this is, from the observation of the surfaces of the optical semiconductor electrode 3 and the counter electrode 4 during the experiment, that since the surface of the optical semiconductor electrode 3 on the n-type semiconductor layer 3b side and the surface of the counter electrode 4 in contact with the electrolyte solution 11 faced upward, the surface of the optical semiconductor electrode 3 was not covered with at least oxygen and the surface of the counter electrode 4 was not covered with at least hydrogen. Another possible reason why these electrodes were not covered with oxygen and hydrogen is that water was supplied to the optical semiconductor electrode 3 and the counter electrode 4 through the inlet 5 provided below the level of the lower end of the optical semiconductor electrode 3 and the level of the lower end of the counter electrode 4 while oxygen was discharged through the oxygen outlet 6a provided at the same level as or above the level of the upper end of the optical semiconductor electrode 3 and hydrogen was discharged through the hydrogen outlet 6b provided at the same level as or above the level of the upper end of the counter electrode 4. Still another possible reason is that since hydrogen ions at least moved from the optical semiconductor electrode 3 side to the counter electrode 4 side through the ion passing portion 12, the initial efficiency of water decomposition could be maintained at a high level for a long period of time.

### (Comparative Example 1)

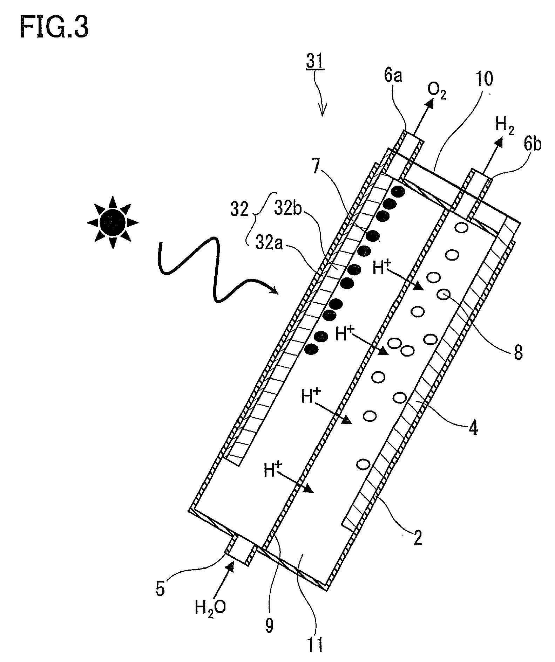

As Comparative Example 1, a photoelectrochemical cell having the same configuration as a photoelectrochemical cell 31 shown in Fig. 3 was fabricated. Specifically, the photoelectrochemical cell 31 was fabricated in the same manner as in Example 1, except that an optical semiconductor electrode 32 that was placed with an n-type semiconductor layer 32b facing downward to face the counter electrode 4 and a conductive substrate 32a being in close contact with the inner wall of the container 2 was provided instead of the optical semiconductor electrode 3 that was placed with the n-type semiconductor layer 3b facing upward in Example 1.

### <Sunlight Irradiation Experiment>

The photoelectrochemical cell 31 of Comparative Example 1 was actually irradiated with sunlight, and as a result, it was confirmed that oxygen was generated on the surface of the optical semiconductor electrode 32 and hydrogen was generated on the surface of the counter electrode 4. Then, the oxygen generation rate and the hydrogen generation rate were measured. As a result, the oxygen generation rate was 1.2 × 10⁻⁷ L/s, and the hydrogen generation rate was 2.3 × 10⁻⁷ L/s, and the ratio between the oxygen generation and the hydrogen generation was 1:2. Thus stoichiometrically, it was confirmed that water was decomposed. The current flowing between the optical semiconductor electrode and the counter electrode was measured. As a result, the current was 1.7 mA, and thus stoichiometrically, it was confirmed that water was electrolyzed. The STH efficiency was calculated using this value, and a value of about 0.021% was obtained.

In the photoelectrochemical cell 31 of Comparative Example 1, as shown in Fig. 3, the oxygen 7 generated on the n-type semiconductor layer 32b of the optical semiconductor electrode 32 adhered to and covered the surface of the n-type semiconductor layer 32b facing downward, which presumably made it difficult for the electrolyte solution 11 to diffuse over the surfaces of the electrodes, and thus decreased the efficiency of water photolysis. Probably for the reason mentioned above, water photolysis became less efficient in the photoelectrochemical cell of Comparative Example 1 than that of Example 1.

### (Comparative Example 2)

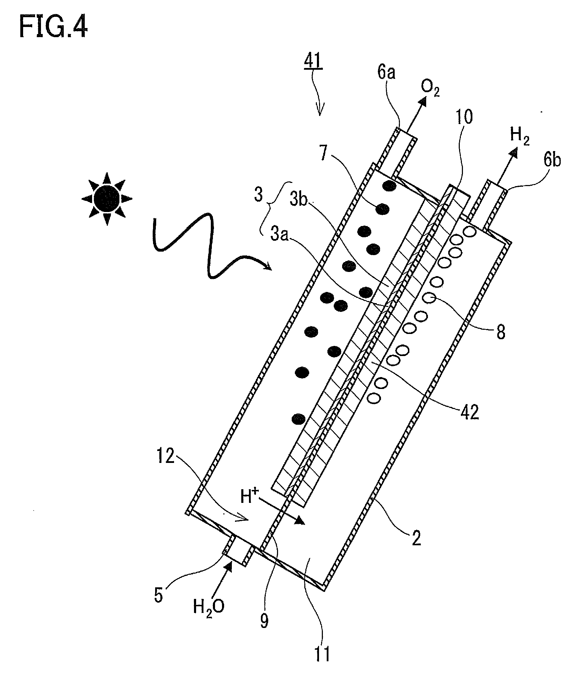

As Comparative Example 2, a photoelectrochemical cell having the same configuration as a photoelectrochemical cell 41 shown in Fig. 4 was fabricated. Specifically, the photoelectrochemical cell 41 was fabricated in the same manner as in Example 1, except that a counter electrode 42 that was placed with its surface in contact with the electrolyte solution 11 facing downward (but its back surface being covered with fluororesin) was used instead of the counter electrode 4 that was placed with its surface in contact with the electrolyte solution 11 facing upward.

### <Sunlight Irradiation Experiment>

The photoelectrochemical cell 41 of Comparative Example 2 was actually irradiated with sunlight, and as a result, it was confirmed that oxygen was generated on the surface of the optical semiconductor electrode 3 and hydrogen was generated on the surface of the counter electrode 42. Then, the oxygen generation rate and the hydrogen generation rate were measured. As a result, the oxygen generation rate was 1.4 × 10⁻⁷ L/s, and the hydrogen generation rate was 2.7 × 10⁻⁷ L/s, and the ratio between the oxygen generation and the hydrogen generation was 1:2. Thus stoichiometrically, it was confirmed that water was decomposed. The current flowing between the optical semiconductor electrode and the counter electrode was measured. As a result, the current was 2.0 mA, and thus stoichiometrically, it was confirmed that water was electrolyzed. The STH efficiency was calculated using this value, and a value of about 0.025% was obtained.

In the photoelectrochemical cell 41 of Comparative Example 2, as shown in Fig. 4, the hydrogen 8 generated on the surface of the counter electrode 42 adhered to and covered the surface of the counter electrode 42 facing downward, which presumably made it difficult for the electrolyte solution 11 to diffuse over the surfaces of the electrodes, and thus decreased the efficiency of water photolysis. Probably for the reason mentioned above, water photolysis became less efficient in the photoelectrochemical cell of Comparative Example 2 than that of Example 1.

### (Comparative Example 3)

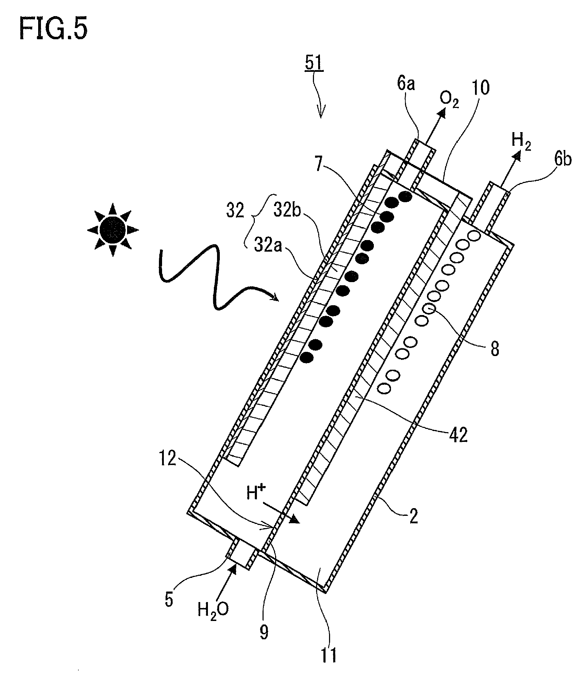

As Comparative Example 3, a photoelectrochemical cell having the same configuration as a photoelectrochemical cell 51 shown in Fig. 5 was fabricated. Specifically, the photoelectrochemical cell 51 was fabricated in the same manner as the photoelectrochemical cell 1 of Example 1, except that the same optical semiconductor electrode 32 of Comparative Example 1 and the same counter electrode 42 of Comparative Example 2 were used.

### <Sunlight Irradiation Experiment>

The photoelectrochemical cell 51 of Comparative Example 3 was actually irradiated with sunlight, and as a result, it was confirmed that oxygen was generated on the surface of the optical semiconductor electrode 32 and hydrogen was generated on the surface of the counter electrodes 42. Then, the oxygen generation rate and the hydrogen generation rate were measured. As a result, the oxygen generation rate was 1.0 × 10⁻⁷ L/s, and the hydrogen generation rate was 2.1 × 10⁻⁷ L/s, and the ratio between the oxygen generation and the hydrogen generation was approximately 1:2. Thus stoichiometrically, it was confirmed that water was decomposed. The photocurrent flowing between the optical semiconductor electrode 32 and the counter electrode 42 was measured. As a result, the photocurrent was 1.6 mA, and thus stoichiometrically, it was confirmed that water was electrolyzed. The STH efficiency was calculated using this value, and a value of about 0.020% was obtained.

In the photoelectrochemical cell 51 of Comparative Example 3, as shown in Fig. 5, the oxygen 7 generated on the n-type semiconductor layer 32b of the optical semiconductor electrode 32 adhered to and covered the surface of the n-type semiconductor layer 32b facing downward. The hydrogen 8 generated on the surface of the counter electrode 42 adhered to and covered the surface of the counter electrode 42 facing downward. Presumably, this made it difficult for the electrolyte solution 11 to diffuse over the surfaces of the electrodes, and thus decreased the efficiency of water photolysis. Probably for the reason mentioned above, water photolysis became less efficient in the photoelectrochemical cell of Comparative Example 3 than that of Example 1.

### (Example 2)

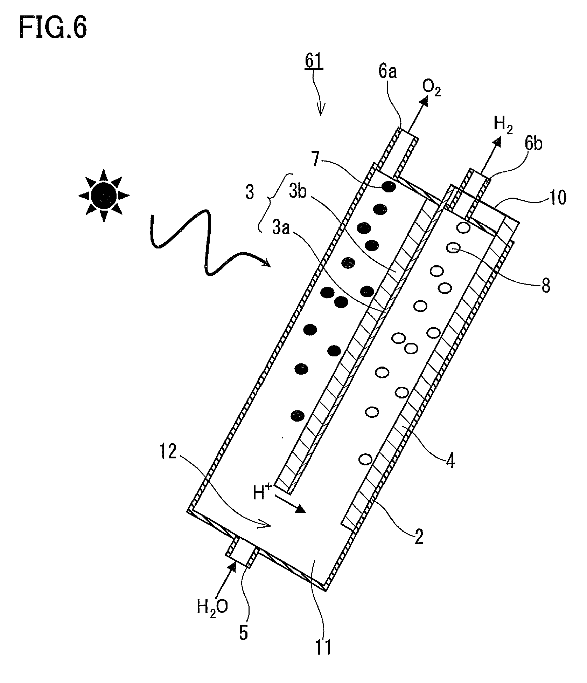

As Example 2, a photoelectrochemical cell having the same configuration as a photoelectrochemical cell 61 shown in Fig. 6 was fabricated. Specifically, the photoelectrochemical cell 61 was fabricated in the same manner as the photoelectrochemical cell 1 of Example 1, except that the gas separation member 9 was not provided.

### <Sunlight Irradiation Experiment>

The photoelectrochemical cell 61 of Example 2 was actually irradiated with sunlight, and as a result, it was confirmed that oxygen was generated on the surface of the optical semiconductor electrode 3 and hydrogen was generated on the surface of the counter electrode 4. Then, the oxygen generation rate and the hydrogen generation rate were measured. As a result, the oxygen generation rate was 4.0 × 10⁻⁷ L/s, and the hydrogen generation rate was 8.1 × 10⁻⁷ L/s, and the ratio between the oxygen generation and the hydrogen generation was approximately 1:2. Thus stoichiometrically, it was confirmed that water was decomposed. The photocurrent flowing between the optical semiconductor electrode 3 and the counter electrode 4 was measured. As a result, the photocurrent was 6.1 mA, and thus stoichiometrically, it was confirmed that water was electrolyzed. The STH efficiency was calculated using this value, and a value of about 0.075% was obtained.

Presumably, since the gas separation member 9 was not provided in the photoelectrochemical cell 61 of Example 2, the transport number of hydrogen ions was increased from that in Example 1. Probably for the reason mentioned above, water photolysis became more efficient in the photoelectrochemical cell of Example 2 than that of Example 1.

### (Example 3)

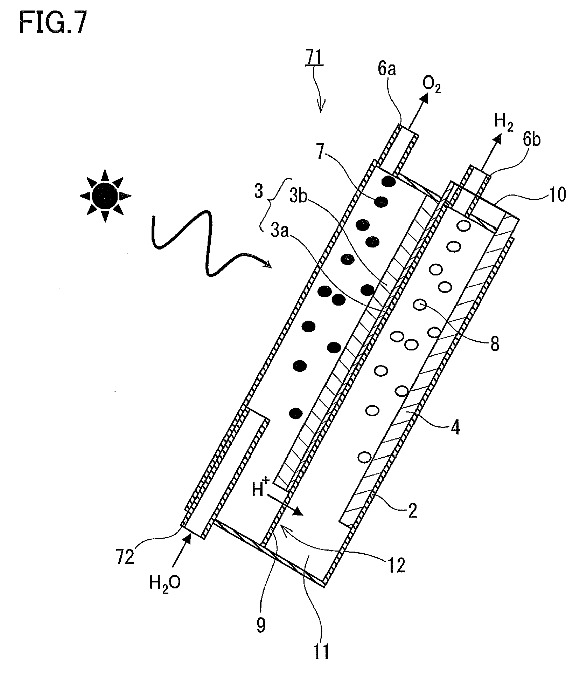

As Example 3, a photoelectrochemical cell having the same configuration as the photoelectrochemical cell 71 shown in Fig. 7 was fabricated. Specifically, an inlet 72 disposed 2 cm above the level of the lower end of the optical semiconductor electrode 3 was used instead of the inlet 5 of Example 1 disposed below the level of the lower end of the optical semiconductor electrode 3 and the level of the lower end of the counter electrode 4, when the lower surface of the container 2 of the photoelectrochemical cell that was set in place was defined as a reference level. The photoelectrochemical cell 71 was fabricated in the same manner as the photoelectrochemical cell 1 of Example 1, except for the configuration of the water inlet.

### <Sunlight Irradiation Experiment>

The photoelectrochemical cell 71 of Example 3 was actually irradiated with sunlight, and as a result, it was confirmed that oxygen was generated on the surface of the optical semiconductor electrode 3 and hydrogen was generated on the surface of the counter electrode 4. Then, the oxygen generation rate and the hydrogen generation rate were measured. As a result, the oxygen generation rate was 1.4 × 10⁻⁷ L/s, and the hydrogen generation rate was 2.8 × 10⁻⁷ L/s, and the ratio between the oxygen generation and the hydrogen generation was approximately 1:2. Thus stoichiometrically, it was confirmed that water was decomposed. The photocurrent flowing between the optical semiconductor electrode 3 and the counter electrode 4 was measured. As a result, the photocurrent was 2.1 mA, and thus stoichiometrically, it was confirmed that water was electrolyzed. The STH efficiency was calculated using this value, and a value of about 0.026% was obtained. These measurements were continued, and a slight decrease in the efficiency was observed.

One possible reason for this is that the water inlet 72 was provided above the level of the lower end of the optical semiconductor electrode 3 and the level of the lower end of the counter electrode 4 in the photoelectrochemical cell 71 of Example 3, which made it more difficult to supply water uniformly to the optical semiconductor electrode 3 and the counter electrode 4 than in the photoelectrochemical cell 1 of Example 1. Furthermore, it was observed that the optical semiconductor electrode 3 was partially covered with the oxygen 7 and the counter electrode 4 was partially covered with the hydrogen 8, which also can be explained by this configuration. Probably for the reason mentioned above, water photolysis became less efficient in the photoelectrochemical cell of Example 3 than that of Example 1.

### (Example 4)

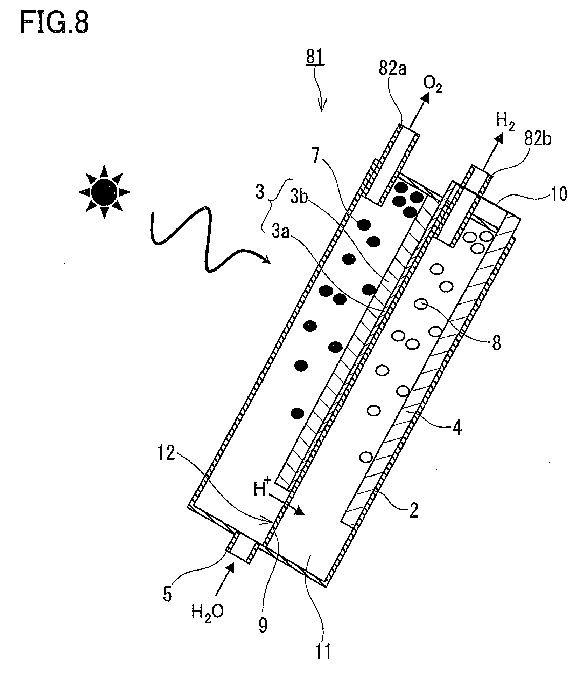

As Example 4, a photoelectrochemical cell having the same configuration as the photoelectrochemical cell 81 shown in Fig. 8 was fabricated. Specifically, an oxygen outlet 82a disposed 2 cm below the level of the upper end of the optical semiconductor electrode 3 and a hydrogen outlet 82b disposed 2cm below the level of the upper end of the counter electrode 4 were used instead of the oxygen outlet 6a of Example 1 disposed at the same level as or above the level of the upper end of the optical semiconductor electrode 3 and the hydrogen outlet 6b of Example 1 disposed at the same level as or above the level of the upper end of the counter electrode 4, when the photoelectrochemical cell was set in place. The photoelectrochemical cell 81 was fabricated in the same manner as the photoelectrochemical cell 1 of Example 1, except for the configuration of the oxygen outlet and the hydrogen outlet.

### <Sunlight Irradiation Experiment>

The photoelectrochemical cell 81 of Example 4 was actually irradiated with sunlight, and as a result, it was confirmed that oxygen was generated on the surface of the optical semiconductor electrode 3 and hydrogen was generated on the surface of the counter electrode 4. Then, the oxygen generation rate and the hydrogen generation rate were measured. As a result, the oxygen generation rate was 1.3 × 10⁻⁷ L/s, and the hydrogen generation rate was 2.6 × 10⁻⁷ L/s, and the ratio between the oxygen generation and the hydrogen generation was approximately 1:2. Thus stoichiometrically, it was confirmed that water was decomposed. The photocurrent flowing between the optical semiconductor electrode 3 and the counter electrode 4 was measured. As a result, the photocurrent was 2.0 mA, and thus stoichiometrically, it was confirmed that water was electrolyzed. The STH efficiency was calculated using this value, and a value of about 0.025% was obtained. These measurements were continued, and a slight decrease in the efficiency was observed.

One possible reason for this is that the oxygen outlet 82a was provided below the level of the upper end of the optical semiconductor electrode 3 and the hydrogen outlet 82b was provided below the level of the upper end of the counter electrode 4 in the photoelectrochemical cell 81 of Example 4, which made it more difficult to discharge oxygen and hydrogen than in the photoelectrochemical cell 1 of Example 1. Furthermore, it was observed that the optical semiconductor electrode 3 was partially covered with the oxygen 7 and the counter electrode 4 was partially covered with the hydrogen 8, which also can be explained by this configuration. Probably for the reason mentioned above, water photolysis became less efficient in the photoelectrochemical cell of Example 4 than that of Example 1.

### (Example 5)

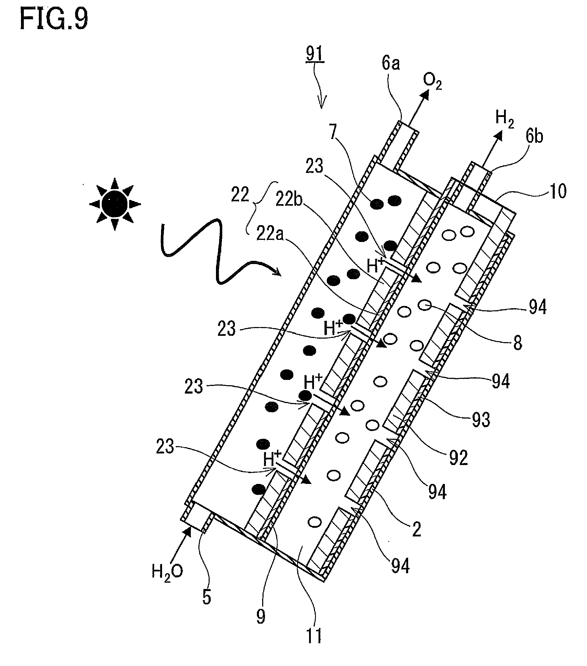

As Example 5, a photoelectrochemical cell having the same configuration as a photoelectrochemical cell 91 shown in Fig. 9 was fabricated. The photoelectrochemical cell of Example 5 is described below with reference to FIG. 9. The photoelectrochemical cell 91 is different from the photoelectrochemical cell 21 shown in Fig. 2 in that slit-shaped through holes 94 were formed in a counter electrode 92 and the back surface of the counter electrode 92 (i.e., the surface not in contact with the electrolyte solution) was covered with a fluororesin tape 93, but has the same configuration as the photoelectrochemical cell 21 described in the second embodiment except for these differences. In Example 5, the counter electrode 92 in which the through-holes 94 were formed was used to compare the efficiency of water photolysis in the configuration of Example 5 accurately with that in the configuration of Comparative Example 6 described below (in which through-holes of a counter electrode must be formed at the positions corresponding to the ion passing portions formed in an optical semiconductor electrode due to the position where the counter electrode was placed). In the photoelectrochemical cell of the present invention, however, there is no need to form through-holes in the counter electrode. In addition, the fluororesin tape 93 was attached to prevent the electrolyte solution 11 from being brought into contact with the back surface of the counter electrode 92 and causing a hydrogen generation reaction on the back surface, so as to make it possible to compare accurately with Comparative Example 6 described below.

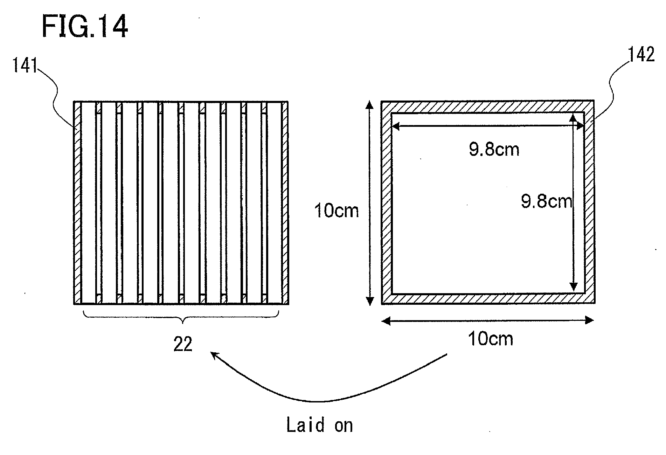

First, an ITO thin film (with a thickness of 150 nm and a sheet resistance of 10 Ω/sq.) was formed by sputtering on a 0.8 cm × 10 cm glass substrate strip. A titanium oxide film (an anatase polycrystalline film with a thickness of 500 nm) serving as the n-type semiconductor layer 22b was formed by sputtering on this ITO thin film-deposited glass substrate (corresponding to the conductive substrate 3a). Thus an ITO thin film-deposited glass substrate on which the n-type semiconductor layer was formed was obtained, and 10 strips of this substrate were prepared. These 10 strips were placed at 0.2 cm intervals (corresponding to the ion passing portions 23). Thus the optical semiconductor electrode 22 was obtained. Specifically, 10 strips of the ITO thin film-deposited glass substrate on which the n-type semiconductor layer was formed were placed between two square frames 141 and 142 with inside dimensions of 9.8 cm × 9.8 cm (and outside dimensions of 10 cm × 10 cm), as shown in Fig. 14, to obtain the optical semiconductor electrode 22. On the other hand, 10 platinum plate strips of 0.8 cm × 10 cm were placed at 0.2 cm intervals and united together in the same manner as described above. Thus the 10 cm × 10 cm square counter electrode 92 was obtained. The back surface of the counter electrode 92 was covered with the fluororesin tape 93. The counter electrode 92 was placed in the container 2 with its back surface being in close contact with the inner wall of the container 2 through the fluororesin tape 93 and its surface facing the conductive substrate 22a. As the gas separation member 9, an ion exchange membrane (Nafion (registered trademark) manufactured by DuPont) that does not allow the oxygen 7 and the hydrogen 8 to pass therethrough and allows hydrogen ions to pass therethrough was provided in contact with the conductive substrate 22a, between the optical semiconductor electrode 22 and the counter electrode 92. The container 2 was inclined at an angle of 60° with respect to the horizontal plane so that both the n-type semiconductor layer 22b of the optical semiconductor electrode 22 and the surface of the counter electrode 92 in contact with the electrolyte solution 11 (i.e., the surface not covered with the fluororesin tape 93) faced upward and that the n-type semiconductor 22b layer was irradiated with sunlight at a right angle. Water with a pH of 1 was used as the electrolyte solution 11.

### <Sunlight Irradiation Experiment>

The photoelectrochemical cell 91 was actually irradiated with sunlight, and as a result, it was confirmed that the oxygen 7 was generated on the surface of the optical semiconductor electrodes 22 and the hydrogen 8 was generated on the surface of the counter electrodes 92. Then, the oxygen generation rate and the hydrogen generation rate were measured. As a result, the oxygen generation rate was 1.3 × 10⁻⁷ L/s, and the hydrogen generation rate was 2.5 × 10⁻⁷ L/s, and the ratio between the oxygen generation and the hydrogen generation was approximately 1:2. Thus stoichiometrically, it was confirmed that water was decomposed. The current flowing between the optical semiconductor electrode 22 and the counter electrode 92 was measured. As a result, the current was 1.8 mA, and thus stoichiometrically, it was confirmed that water was electrolyzed. The solar-to-hydrogen (STH) conversion efficiency was calculated using this value based on the lower heating value, and a value of about 0.023% was obtained.

### (Example 6)

A photoelectrochemical cell was fabricated in the same manner as in Example 5, except that a 10 cm square titanium wire mesh (with a wire diameter of 0.1 mm and a mesh number of 100) was used instead of the conductive substrate 22a used in Example 5.

### <Sunlight Irradiation Experiment>

The photoelectrochemical cell of Example 6 was actually irradiated with sunlight, and as a result, it was confirmed that oxygen was generated on the surface of the optical semiconductor electrode and hydrogen was generated on the surface of the counter electrode. Then, the oxygen generation rate and the hydrogen generation rate were measured. As a result, the oxygen generation rate was 1.7 × 10⁻⁷ L/s, and the hydrogen generation rate was 3.3 × 10⁻⁷ L/s, and the ratio between the oxygen generation and the hydrogen generation was approximately 1:2. Thus stoichiometrically, it was confirmed that water was decomposed. The current flowing between the optical semiconductor electrode and the counter electrode was measured. As a result, the current was 2.3 mA, and thus stoichiometrically, it was confirmed that water was electrolyzed. The STH efficiency was calculated using this value, and a value of about 0.028% was obtained.

As described above, the photoelectrochemical cell of Example 6 showed better results than the photoelectrochemical cell of Example 5. In the configuration of Example 5, there was no n-type semiconductor in the through-holes. In contrast, in the mesh-type optical semiconductor electrode of Example 6, there was an n-type semiconductor in the openings of the mesh, which increased the surface area of the n-type semiconductor layer. Furthermore, the mesh-type electrode made it possible not only to reduce the cross-sectional area of each through-hole but also to distribute the through-holes uniformly throughout the surface of the electrode. Probably for the reasons mentioned above, water photolysis became more efficient in the photoelectrochemical cell of Example 6 than that of Example 5.

### (Example 7)

A photoelectrochemical cell was fabricated in the same manner as in Example 5, except that a 10 cm square and 1 cm thick titanium metal honeycomb (with an opposite side distance of 6 mm) was used instead of the conductive substrate 22a used in Example 5.

### <Sunlight Irradiation Experiment>

The photoelectrochemical cell of Example 7 was actually irradiated with sunlight, and as a result, it was confirmed that oxygen was generated on the surface of the optical semiconductor electrode and hydrogen was generated on the surface of the counter electrode. Then, the oxygen generation rate and the hydrogen generation rate were measured. As a result, the oxygen generation rate was 1.9 × 10⁻⁷ L/s, and the hydrogen generation rate was 3.6 × 10⁻⁷ L/s, and the ratio between the oxygen generation and the hydrogen generation was approximately 1:2. Thus stoichiometrically, it was confirmed that water was decomposed. The current flowing between the optical semiconductor electrode and the counter electrode was measured. As a result, the current was 2.5 mA, and thus stoichiometrically, it was confirmed that water was electrolyzed. The STH efficiency was calculated using this value, and a value of about 0.031% was obtained.

As described above, the photoelectrochemical cell of Example 7 showed better results than the photoelectrochemical cells of Example 5 and Example 6. Presumably, these behaviors were observed because the honeycomb structure of the optical semiconductor electrode provided the same advantageous effects of the mesh structure of the optical semiconductor electrode of Example 6 and, in addition, allowed an n-type semiconductor to be formed also on the side wall of each through-hole, which achieved more effective use of sunlight with which the through-holes were irradiated. Probably as a result, the efficiency of water photoelectrolysis could further be improved.

### (Comparative Example 4)

A conductive substrate composed of a 8 cm × 10 cm glass substrate and an ITO thin film (with a thickness of 150 nm and a sheet resistance of 10 Ω/sq.) formed thereon by sputtering was used instead of the conductive substrate 22a used in Example 5. An n-type semiconductor layer was formed on this conductive substrate in the same manner as in Example 1. Thus an optical semiconductor electrode was obtained. That is, no ion passing portion was provided in the optical semiconductor electrode of Comparative Example 4. The 8 cm × 10 cm optical semiconductor electrode thus fabricated was placed on a 10 cm × 10 cm surface, with a margin of 1 cm × 10 cm on each side thereof, inside a container like that of Example 5. The configuration was the same as that of Example 5 except for this optical semiconductor electrode.

### <Sunlight Irradiation Experiment>

The photoelectrochemical cell of Comparative Example 4 was actually irradiated with sunlight, and as a result, it was confirmed that oxygen was generated on the surface of the optical semiconductor electrode and hydrogen was generated on the surface of the counter electrode. Then, the oxygen generation rate and the hydrogen generation rate were measured. As a result, the oxygen generation rate was 0.8 × 10⁻⁷ L/s, and the hydrogen generation rate was 1.6 × 10⁻⁷ L/s, and the ratio between the oxygen generation and the hydrogen generation was approximately 1:2. Thus stoichiometrically, it was confirmed that water was decomposed. The current flowing between the optical semiconductor electrode and the counter electrode was measured. As a result, the current was 0.9 mA, and thus stoichiometrically, it was confirmed that water was electrolyzed. The STH efficiency was calculated using this value, and a value of about 0.014% was obtained.

In the configuration of Comparative Example 4, ions can move between the surface of the optical semiconductor layer of the optical semiconductor electrode and the surface of the counter electrode only through the spaces between the end portions of the optical semiconductor electrode and the inner wall of the container. If these spaces are the only spaces through which the ions can pass, hydrogen ions must be diffused to the end portions of the optical semiconductor electrode, and the diffusion resistance increases. In addition, since the diffusion of the hydrogen ions is concentrated in the region of the counter electrode near the spaces, the hydrogen overvoltage of the counter electrode increases. Probably as a result, the efficiency of water photoelectrolysis decreases significantly.

### (Comparative Example 5)

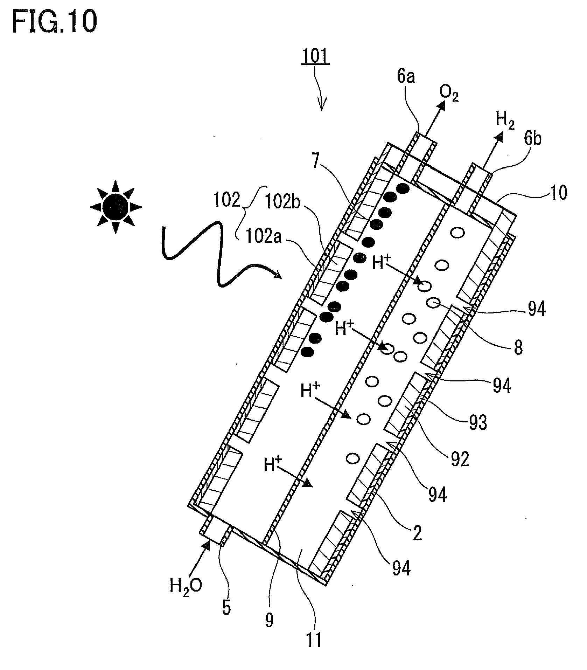

As Comparative Example 5, a photoelectrochemical cell having the same configuration as a photoelectrochemical cell 101 shown in Fig. 10 was fabricated. Specifically, the photoelectrochemical cell 101 was fabricated in the same manner as in Example 5, except that an optical semiconductor electrode 102 that was placed with an n-type semiconductor layer 102b facing downward and a conductive substrate 102a being in close contact with the inner wall of the container 2 was provided, instead of the optical semiconductor electrode 22 of Example 5 that was placed with the n-type semiconductor layer 22b facing upward.

### <Sunlight Irradiation Experiment>

The photoelectrochemical cell 51 of Comparative Example 5 was actually irradiated with sunlight, and as a result, it was confirmed that oxygen was generated on the surface of the optical semiconductor electrode 102 and hydrogen was generated on the surface of the counter electrode 92. Then, the oxygen generation rate and the hydrogen generation rate were measured. As a result, the oxygen generation rate was 1.0 × 10⁻⁷ L/s, and the hydrogen generation rate was 1.8 × 10⁻⁷ L/s, and the ratio between the oxygen generation and the hydrogen generation was approximately 1:2. Thus stoichiometrically, it was confirmed that water was decomposed. The current flowing between the optical semiconductor electrode 102 and the counter electrode 92 was measured. As a result, the current was 1.3 mA, and thus stoichiometrically, it was confirmed that water was electrolyzed. The STH efficiency was calculated using this value, and a value of about 0.016% was obtained.

In the photoelectrochemical cell 101 of Comparative Example 5, as shown in Fig. 10, the oxygen 7 generated on the n-type semiconductor layer 102b of the optical semiconductor electrode 102 adhered to and covered the surface of the n-type semiconductor layer 102b facing downward. Presumably, this made it difficult for the electrolyte solution 11 to diffuse over the surfaces of the electrodes, and thus decreased the efficiency of water photolysis.

### (Comparative Example 6)

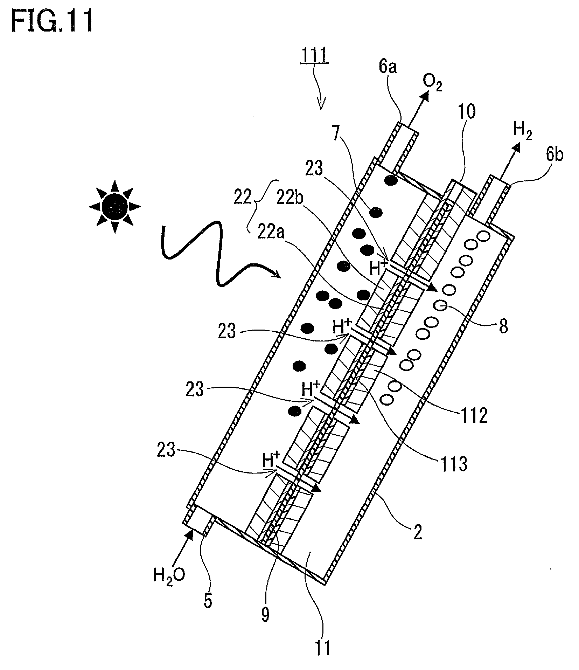

As Comparative Example 6, a photoelectrochemical cell having the same configuration as a photoelectrochemical cell 111 shown in Fig. 11 was fabricated. Specifically, the photoelectrochemical cell 111 was fabricated in the same manner as in Example 5, except that a counter electrode 112 that was placed with its surface in contact with the electrolyte solution 11 facing downward (but its back surface being covered with a fluororesin tape 113) was used instead of the counter electrode 92 of Example 5 that was placed with its surface in contact with the electrolyte solution 11 facing upward.

### <Sunlight Irradiation Experiment>

The photoelectrochemical cell 111 of Comparative Example 6 was actually irradiated with sunlight, and as a result, it was confirmed that oxygen was generated on the surface of the optical semiconductor electrode 22 and hydrogen was generated on the surface of the counter electrode 112. Then, the oxygen generation rate and the hydrogen generation rate were measured. As a result, the oxygen generation rate was 1.1 × 10⁻⁷ L/s, and the hydrogen generation rate was 2.2 × 10⁻⁷ L/s, and the ratio between the oxygen generation and the hydrogen generation was 1:2. Thus stoichiometrically, it was confirmed that water was decomposed. The current flowing between the optical semiconductor electrode 22 and the counter electrode 112 was measured. As a result, the current was 1.4 mA, and thus stoichiometrically, it was confirmed that water was electrolyzed. The STH efficiency was calculated using this value, and a value of about 0.016% was obtained.

In the photoelectrochemical cell 111 of Comparative Example 6, as shown in Fig. 11, the hydrogen 8 generated on the surface of the counter electrode 112 adhered to and covered the surface of the counter electrode 112 facing downward. Presumably, this made it difficult for the electrolyte solution 11 to diffuse over the surfaces of the electrodes, and thus decreased the efficiency of water photolysis.

### (Comparative Example 7)

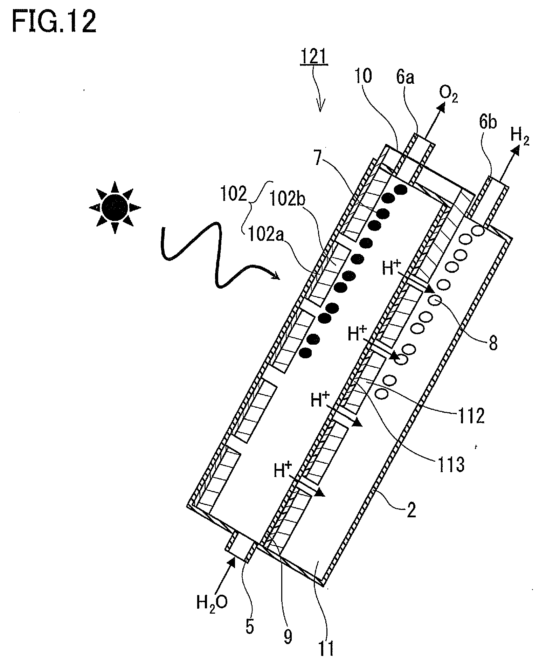

As Comparative Example 7, a photoelectrochemical cell having the same configuration as a photoelectrochemical cell 121 shown in Fig. 12 was fabricated. Specifically, the photoelectrochemical cell 121 was fabricated in the same manner as the photoelectrochemical cell 91 of Example 5, except that the same optical semiconductor electrode 102 of Comparative Example 5 and the same counter electrode 112 of Comparative Example 6 were used.

### <Sunlight Irradiation Experiment>

The photoelectrochemical cell 111 of Comparative Example 7 was actually irradiated with sunlight, and as a result, it was confirmed that oxygen was generated on the surface of the optical semiconductor electrode 102 and hydrogen was generated on the surface of the counter electrode 112. Then, the oxygen generation rate and the hydrogen generation rate were measured. As a result, the oxygen generation rate was 0.8 × 10⁻⁷ L/s, and the hydrogen generation rate was 1.7 × 10⁻⁷ L/s, and the ratio between the oxygen generation and the hydrogen generation was approximately 1:2. Thus stoichiometrically, it was confirmed that water was decomposed. The photocurrent flowing between the optical semiconductor electrode 102 and the counter electrode 112 was measured. As a result, the photocurrent was 1.0 mA, and thus stoichiometrically, it was confirmed that water was electrolyzed. The STH efficiency was calculated using this value, and a value of about 0.013% was obtained.

In the photoelectrochemical cell 121 of Comparative Example 7, as shown in Fig. 12, the oxygen 7 generated on the n-type semiconductor layer 102b of the optical semiconductor electrode 102 adhered to and covered the surface of the n-type semiconductor layer 102b facing downward. The hydrogen 8 generated on the surface of the counter electrode 112 adhered to and covered the surface of the counter electrode 112 facing downward. Presumably, this made it difficult for the electrolyte solution 11 to diffuse over the surfaces of the electrodes, and thus decreased the efficiency of water photolysis.

### (Comparative Example 8)

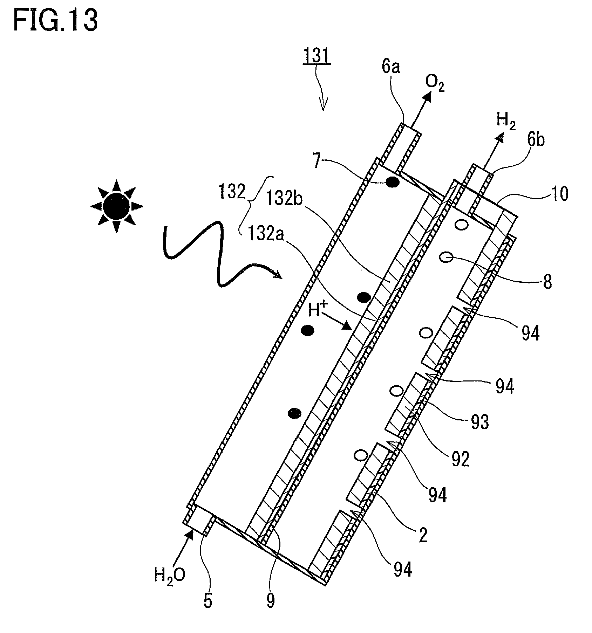

As Comparative Example 8, a photoelectrochemical cell having the same configuration as a photoelectrochemical cell 131 shown in Fig. 13 was fabricated. Specifically, the photoelectrochemical cell 131 was fabricated in the same manner as in Example 1, except that a conductive substrate 132a composed of a 10 cm square glass substrate and an ITO thin film (with a thickness of 150 nm and a sheet resistance of 10 Ω/sq.) formed thereon by sputtering was used instead of the conductive substrate 22a used in Example 5. An n-type semiconductor layer 132b that was fabricated in the same manner as in Example 1 was disposed on this conductive substrate 132a. Thus an optical semiconductor electrode 132 was formed.

### <Sunlight Irradiation Experiment>

The photoelectrochemical cell 131 of Comparative Example 8 was actually irradiated with sunlight, and as a result, it could not be confirmed that oxygen was generated on the surface of the optical semiconductor electrode 132 and hydrogen was generated on the surface of the counter electrode 92. Presumably, these behaviors were observed because the optical semiconductor electrode 132 divided the inner space of the cell into a region where the n-type semiconductor layer 132b was located and a region where the counter electrode 92 was located, which blocked the movement of hydrogen ions to the counter electrode 92.

### INDUSTRIAL APPLICABILITY

Since the photoelectrochemical cell of the present invention can improve the quantum efficiency of hydrogen generation reaction by light irradiation, it can be suitably used as a hydrogen source for fuel cells, or the like.

## Claims

1. A photoelectrochemical cell (1) for hydrogen generation by decomposition of water by light irradiation, the cell comprising:
a first electrode (3) including a conductive substrate (3a) and an optical semiconductor layer (3b) disposed on the conductive substrate;
a second electrode (4) disposed in such a position that a surface of the second electrode (4) faces a surface of the first electrode (3) on a conductive substrate (3a) side, the second electrode being connected electrically to the conductive substrate (3a);
an electrolyte solution (11) containing water and disposed in contact with a surface of the optical semiconductor layer (3b) and the surface of the second electrode (4) facing the surface of the first electrode (3);
a container (2) in which the first electrode (3), the second electrode (4), and the electrolyte solution (11) are disposed;
an inlet (5) for supplying water into the container; and
an ion passing portion (12) that allows ions to move between the electrolyte solution in a first region (A) on a surface side of the optical semiconductor layer (3b) and the electrolyte solution in a second region (B) on an opposite side of the first region (A) with respect to the first electrode,
wherein when the optical semiconductor layer is irradiated with light, the water in the electrolyte solution (11) is decomposed to generate hydrogen,
**characterized in that** when the photoelectrochemical cell (1) is set in place, the first electrode (3) is positioned with the optical semiconductor layer (3b) facing upward, and the second electrode (4) is positioned with the surface in contact with the electrolyte solution (11) facing upward.

2. The photoelectrochemical cell (1) according to claim 1, wherein the ion passing portion (12) is provided below a level of a lower end of the first electrode (3) and a level of a lower end of the second electrode (4), when a lower surface of the container (2) of the photoelectrochemical cell that is set in place is defined as a reference level.

3. The photoelectrochemical cell (1) according to claim 1, wherein the ion passing portion (12) is a through-hole formed in the first electrode (3).

4. The photoelectrochemical cell (1) according to claim 3, wherein the first electrode (3) has a mesh structure.

5. The photoelectrochemical cell (1) according to claim 3, wherein the first electrode (3) has a honeycomb structure.

6. The photoelectrochemical cell (1) according to claim 1, further comprising a gas separation member (9) disposed between the first electrode (3) and the second electrode (4) so as to separate a gas generated on a first electrode side and a gas generated on a second electrode side from each other.

7. The photoelectrochemical cell (1) according to claim 6, wherein the gas separation member (9) is an ion exchanger.

8. The photoelectrochemical cell (1) according to claim 1, wherein the second electrode (4) has a smaller area than the first electrode (3).

9. The photoelectrochemical cell (1) according to claim 1, wherein the inlet (5) is provided below a level of a lower end of the first electrode (3) and a level of a lower end of the second electrode (4), when a lower surface of the container (2) of the photoelectrochemical cell (1) that is set in place is defined as a reference level.

10. The photoelectrochemical cell (1) according to claim 1, further comprising: a first outlet (6a) for discharging a gas generated on a first electrode side; and a second outlet (6b) for discharging a gas generated on a second electrode side,
wherein the first outlet and the second outlet are disposed so that the first outlet is located at the same level as or above a level of an upper end of the first electrode (3) and that the second outlet is located at the same level as or above a level of an upper end of the second electrode (4), when the photoelectrochemical cell (1) is set in place.

## Patentansprüche

1. Photoelektrochemische Zelle (1) zum Erzeugen von Wasserstoff durch Zersetzen von Wasser durch eine Bestrahlung mit Licht, wobei die Zelle Folgendes umfasst:
eine erste Elektrode (3), die ein leitfähiges Substrat (3 a) und eine optische Halbleiterschicht (3 b) einschließt, welche auf dem leitfähigen Substrat angeordnet ist;
eine zweite Elektrode (4), die in einer solchen Position angeordnet ist, dass eine Oberfläche der zweiten Elektrode (4) gegenüber einer Oberfläche der ersten Elektrode (3) auf einer Seite des leitfähigen Substrats (3 a) angeordnet ist, wobei die zweite Elektrode mit dem leitfähigen Substrat (3 a) elektrisch verbunden ist;
eine Elektrolytlösung (11), die Wasser enthält und die in Kontakt mit einer Oberfläche der optischen Halbleiterschicht (3 b) und der Oberfläche der zweiten Elektrode (4), welche der Oberfläche der ersten Elektrode (3) gegenüberliegt, angeordnet ist;
einen Behälter (2), in dem die erste Elektrode (3), die zweite Elektrode (4) und die Elektrolytlösung (11) angeordnet sind;
einen Einlass (5) zum Zuführen von Wasser in den Behälter; und
ein Ionendurchgangsabschnitt (12), welcher gestattet, dass sich Ionen zwischen der Elektrolytlösung in einem ersten Bereich (A) auf einer Seite der Oberfläche der optischen Halbleiterschicht (3 b), und der Elektrolytlösung in einem zweiten Bereich (B) auf einer Seite, gegenüber des ersten Bereichs (A), in Bezug auf die erste Elektrode bewegen,
wobei, wenn die optische Halbleiterschicht mit Licht bestrahlt wird, das Wasser in der Elektrolytlösung (11) zersetzt wird, um Wasserstoff zu erzeugen,
**dadurch gekennzeichnet, dass** wenn die photoelektrochemische Zelle (1) in ihrer Position eingerichtet ist, die erste Elektrode (3) so positioniert ist, dass die optische Halbleiterschicht (3 b) nach oben gerichtet ist, und die zweite Elektrode (4) so positioniert ist, dass die Oberfläche in Kontakt mit der Elektrolytlösung (11) nach oben gerichtet ist.

2. Photoelektrochemische Zelle (1) nach Anspruch 1, wobei der Ionendurchgangsabschnitt (12) unterhalb einer Höhe von einem unteren Ende der ersten Elektrode (3) und einer Höhe von einem unteren Ende der zweiten Elektrode (4) vorgesehen ist, wenn eine untere Oberfläche des Behälters (2) der in ihrer Position eingerichteten photoelektrochemischen Zelle als eine Referenzhöhe definiert ist.

3. Photoelektrochemische Zelle (1) nach Anspruch 1, wobei der Ionendurchgangsabschnitt (12) ein Durchgangsloch darstellt, das in der ersten Elektrode (3) gebildet ist.

4. Photoelektrochemische Zelle (1) nach Anspruch 3, wobei die erste Elektrode (3) eine Netzstruktur aufweist.

5. Photoelektrochemische Zelle (1) nach Anspruch 3, wobei die erste Elektrode (3) eine Wabenstruktur aufweist.

6. Photoelektrochemische Zelle (1) nach Anspruch 1, ferner ein Gastrennungselement (9) umfassend, das zwischen der ersten Elektrode (3) und der zweiten Elektrode (4) angeordnet ist, um ein Gas, das auf einer Seite der ersten Elektrode erzeugt wird, und ein Gas, das auf einer Seite der zweiten Elektrode erzeugt wird, voneinander zu trennen.

7. Photoelektrochemische Zelle (1) nach Anspruch 6, wobei das Gastrennungselement (9) ein Ionenaustauscher ist.

8. Photoelektrochemische Zelle (1) nach Anspruch 1, wobei die zweite Elektrode (4) eine kleinere Fläche als die erste Elektrode (3) aufweist.

9. Photoelektrochemische Zelle (1) nach Anspruch 1, wobei der Einlass (5) unterhalb einer Höhe eines unteren Endes der ersten Elektrode (3) und einer Höhe eines unteren Endes der zweiten Elektrode (4) vorgesehen ist, wenn eine untere Oberfläche des Behälters (2) der in ihrer Position eingerichteten photoelektrochemischen Zelle (1) als eine Referenzhöhe definiert ist.

10. Photoelektrochemische Zelle (1) nach Anspruch 1, ferner Folgendes umfassend:
einen ersten Auslass (6 a), um ein Gas, welches auf einer Seite der ersten Elektrode erzeugt wird, abzulassen; und einen zweiten Auslass (6 b), um ein Gas, welches auf einer Seite der zweiten Elektrode erzeugt wird, abzulassen;
wobei der erste Auslass und der zweite Auslass so angeordnet sind, dass der erste Auslass auf der gleichen Höhe wie ein oberes Ende der ersten Elektrode (3) oder oberhalb dieser Höhe angeordnet ist, und dass der zweite Auslass auf der gleichen Höhe wie ein oberes Ende der zweiten Elektrode (4) oder oberhalb dieser Höhe angeordnet ist, wenn die photoelektrochemische Zelle (1) in ihrer Position eingerichtet ist.

## Revendications

1. Cellule photo-électrochimique (1) pour la génération d'hydrogène par décomposition d'eau par rayonnement de lumière, la cellule comprenant:
une première électrode (3) comprenant un substrat conducteur (3a) et une couche semi-conductrice optique (3b) disposée sur le substrat conducteur;
une deuxième électrode (4) disposée dans une position telle qu'une surface de la deuxième électrode (4) est située en regard d'une surface de la première électrode (3) sur un côté du substrat conducteur (3a), la deuxième électrode étant reliée électriquement au substrat conducteur (3a);
une solution d'électrolyte (11) contenant de l'eau et disposée en contact avec une surface de la couche semi-conductrice optique (3b) et la surface de la deuxième électrode (4), qui est située en regard de la surface de la première électrode (3);
un récipient (2) dans lequel sont disposées la première électrode (3), la deuxième électrode (4) et la solution d'électrolyte (11);
une entrée (5) pour fournir de l'eau dans le récipient; et
une portion de passage d'ions (12) qui permet à des ions de se déplacer entre la solution d'électrolyte dans une première zone (A) sur un côté de la surface de la couche semi-conductrice optique (3b) et la solution d'électrolyte dans une deuxième zone (B) sur un côté opposé à la première zone (A) par rapport à la première électrode,
dans laquelle, lorsque la couche semi-conductrice optique est exposée à la lumière, l'eau contenue dans la solution d'électrolyte (11) est décomposée pour générer de l'hydrogène,
**caractérisée par le fait que**, lorsque la cellule photo-électrochimique (1) est mise en place, la première électrode (3) est positionnée de telle manière que la couche semi-conductrice optique (3b) montre vers le haut et la deuxième électrode (4) est positionnée de telle manière que la surface en contact avec la solution d'électrolyte (11) montre vers le haut.

2. Cellule photo-électrochimique (1) selon la revendication 1, dans laquelle la portion de passage d'ions (12) est prévue au-dessous d'un niveau d'une extrémité inférieure de la première électrode (3) et d'un niveau d'une extrémité inférieure de la deuxième électrode (4), lorsqu'une surface inférieure du récipient (2) de la cellule photo-électrochimique qui est mise en place est définie comme un niveau de référence.

3. Cellule photo-électrochimique (1) selon la revendication 1, dans laquelle la portion de passage d'ions (12) est un trou traversant formé dans la première électrode (3).

4. Cellule photo-électrochimique (1) selon la revendication 3, dans laquelle la première électrode (3) présente une structure de filet.

5. Cellule photo-électrochimique (1) selon la revendication 3, dans laquelle la première électrode (3) présente une structure en nids d'abeille.

6. Cellule photo-électrochimique (1) selon la revendication 1, comprenant en outre un élément de séparation de gaz (9) disposé entre la première électrode (3) et la deuxième électrode (4) de manière à séparer l'un de l'autre un gaz généré sur un côté de la première électrode et un gaz généré sur un côté de la deuxième électrode.

7. Cellule photo-électrochimique (1) selon la revendication 6, dans laquelle ledit élément de séparation de gaz (9) est un échangeur d'ions.

8. Cellule photo-électrochimique (1) selon la revendication 1, dans laquelle la deuxième électrode (4) présente une surface plus petite que celle de la première électrode (3).

9. Cellule photo-électrochimique (1) selon la revendication 1, dans laquelle l'entrée (5) est prévue au-dessous d'un niveau d'une extrémité inférieure de la première électrode (3) et d'un niveau d'une extrémité inférieure de la deuxième électrode (4), lorsqu'une surface inférieure du récipient (2) de la cellule photo-électrochimique (1) qui est mise en place est définie comme un niveau de référence.

10. Cellule photo-électrochimique (1) selon la revendication 1, comprenant en outre:
une première sortie (6a) pour évacuer un gaz généré sur un côté de la première électrode; et une deuxième sortie (6b) pour évacuer un gaz généré sur un côté de la deuxième électrode,
dans laquelle la première sortie et la deuxième sortie sont disposées de telle sorte que la première sortie est située au même niveau qu'une extrémité supérieure de la première électrode (3) ou au-dessus de ce niveau et que la deuxième sortie est située au même niveau qu'une extrémité supérieure de la deuxième électrode (4) ou au-dessus de ce niveau, lorsque la cellule photo-électrochimique (1) est mise en place.
